# EUROPÄISCHE PATENTSCHRIFT

(11) **EP 1 079 538 B1**
(45) Veröffentlichungstag und Bekanntmachung des Hinweises auf die Patenterteilung: **11.10.2006**
(21) Anmeldenummer: 00117461.4
(22) Anmeldetag: 11.08.2000
(51) Int. Cl.: H04B 3/56

(54) **Ankoppeleinheit mit integriertem Steckkontaktbereich zur Ankopplung einer Datenübertragungsvorrichtung an die Phase eines elektrischen Energieübertragungsnetzes**
Coupling device with integrated plug contact for coupling a data transmission device with the phase in power line network
Appareil de couplage avec prise de contact intégrée pour le couplage d'un appareil de transmission de données avec la phase d'un réseau d'alimentation

(30) Priorität: 18.08.1999 DE 29914236 U
(43) Veröffentlichungstag der Anmeldung: 28.02.2001
(73) Patentinhaber: SIEMENS AKTIENGESELLSCHAFT, 80333 München (DE)
(72) Erfinder: Ermisch, Jochen, Dr., 01445 Radebeul (DE); Georgi, Axel. Dr., 01462 Dresden (DE); Oechsle, Walter, Dipl.-Ing. (FH), 90765 Fürth (DE)

(56) Entgegenhaltungen:
- WO-A-98/33258
- GB-A- 2 304 013

## Beschreibung

Die WO 98/33258 A2 offenbart ein Powerline-Kommunikationsnetzwerk zur Übertragung von Energie- und Kommunikationssignalen. In der Energieübertragungsleitung ist eine Sicherungseinheit integriert, die zur Ankopplung und zum Schutz von Kommunikationsgeräten an die Energieübertragungsleitung dient. Gemäß der dortigen Erfindung ist die Sicherungseinheit so konzipiert, dass sie gegen herkömmliche Sicherungen ausgetauscht werden kann. Nachteilig ist hierbei jedoch, dass zur Auswechslung der Sicherung das betroffene Segment des Energieübertragungsneztes abgeschaltet werden muss.

Die Erfindung betrifft eine Ankoppeleinheit zur insbesondere kapazitiven Ankopplung einer Datenübertragungsvorrichtung an die Phase eines elektrischen Energieübertragungsnetzes, insbesondere eines Mittelspannungsnetzes. Als Ankoppeleinheit wird hierbei eine Vorrichtung bezeichnet, wie sie z.B. in der Internationalen Anmeldung WO 0049726 A beschrieben ist.

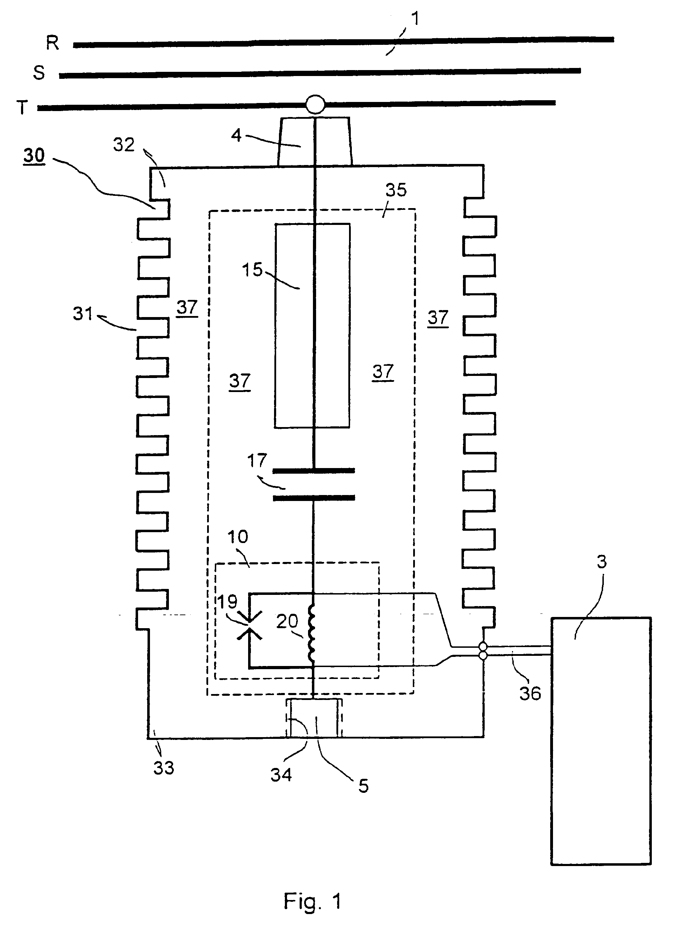

In der Figur 1 ist eine derartige Ankoppeleinheit 30 beispielhaft im Schnitt dargestellt. Die Ankoppeleinheit 30 weist ein Gehäuse 31 auf, in das eine Ankoppelschaltung 35 eingebettet ist. Vorzugsweise ist der Innenbereich des Gehäuses 31 einschließlich der eingelegten Ankoppelschaltung 35 vollständig mit einem elektrisch isolierenden und bevorzugt selbständig aushärtenden Werkstoff 37 ausgegossen.

Die beispielhafte Ankoppelschaltung 35 enthält eine Reihenschaltung aus einer Feinsicherung 15, einem Koppelkondensator 17 und einer Parallelschaltung eines Überspannungsableiters 19 mit einer Ableitspule 20. Die Feinsicherung 15 ist in Fi gur 1 an dem oberen Ende der Reihenschaltung beispielhaft an die Phase T eines elektrischen Energieübertragungsnetzes 1 angeschlossen, insbesondere eines Mittelspannungsnetzes. Überspannungsableiter 19 und Ableitspule 20 sind in Figur 1 an dem unteren Ende der Reihenschaltung an einem Bezugspotential 5 angeschlossen, insbesondere einem Massepotential. Die Verbindungspunkte der Parallelschaltung von Überspannungsableiter 19 und Ableitspule 20 sind auf die Außenseite des Gehäuses 31 der Ankoppeleinheit 30 geführt. Dort befindet sich beispielhaft eine Anschlussbuchse 36, an die eine Datenübertragungseinrichtung 3 anschließbar ist. Mit dieser können Daten, z.B. Steuersignale, in die Phase eines Mittelspannungsnetzes eingespeist bzw. aus dieser empfangen werden.

Bei einer derartigen Ankoppeleinheit 30 sind die elektrischen Kennwerte der Feinsicherung 15 so ausgewählt, daß die Feinsicherung 15 im Normalbetrieb weder von einem Strom zu einer angeschlossenen Datenübertragungseinrichtung, noch von Überspannungen im elektrischen Energieübertragungsnetz 1 ausgelöst wird. Darüber hinaus sind die elektrischen Kennwerte der Feinsicherung 15 und des Überspannungsableiters 19 so aufeinander abgestimmt, daß im Falle einer Durchlegierung des Koppelkondensators 17, d.h. eines Defektes innerhalb der Ankoppeleinheit 30, die Feinsicherung 15 bereits von einem anklingenden Kurzschlußstrom durch den Überspannungsableiter 19 schnell und sicher ausgelöst wird.

Im Beispiel der Figur 1 sind alle Elemente der Ankoppelschaltung 35 komplett mit einem elektrisch isolierenden Werkstoff 37 gehäuseartig umgeben. Bevorzugt sind die Bauteile mit Epoxydharz umspritzt oder im Inneren eines topfartigen Gehäuses eingegossen, bzw. in Keramik eingebettet. Es entsteht dabei bevorzugt eine Ankoppeleinheit 30, deren gehäuseartige äußere Form mit der eines Stützisolators vergleichbar ist. Dies hat den Vorteil, daß keines der Elemente von außen zugänglich und somit nach Eintritt eines Fehlers austauschbar ist. Da vielmehr damit gerechnet werden muß, daß nach Auftreten eines Kurzschlusses zusätzlich zur durchgeschmolzenen Feinsicherung auch weitere Bauteile im Inneren beeinträchtigt bzw. beschädigt sein könnten, ist ein vollständiger Austausch der gesamten Ankoppeleinheit sicherer.

Vorteilhaft sind auf der Außenseite der Ankoppeleinheit 30 nur drei Anschlüsse der Ankoppelschaltung 35 zugänglich. Bei der in Figur 1 dargestellten Ausführung befindet sich der erste von außen zugängliche Anschlußpunkt 4 der Reihenschaltung 9 an die Phase T des Energieversorgungsnetzes 1 an einem Kopfbereich 32 des Gehäuses 31. Dieser weist z.B. einen vorstehenden, leitenden Bolzen auf. Der zweite, von außen zugängliche Anschlußpunkt 5 der Reihenschaltung 9 an ein Bezugspotential befindet sich an einem Bodenbereich 33 des Gehäuses 31. Zur sicheren Herstellung einer Masseverbindung ist dieser vorteilhaft mit einem Innengewinde 34 ausgestattet. Schließlich ist ein dritter Anschlußpunkt 36 für eine Verbindung der Ableitspule 20 mit einer externen Datenübertragungsvorrichtung, vorteilhaft in Form einer einzigen Steckbuchse 36 ausgeführt, in einem Mantel des Gehäuses 31 angeordnet.

Besonders vorteilhaft weist die Ankoppeleinheit 30 eine mit einem Stützisolator vergleichbare, bevorzugt zylindrische äußere Form auf. Für den Fall, daß die Ankoppeleinheit 30 im Freiluftbereich eingesetzt wird, kann das Gehäuse 31 auf der Mantelseite zur Erhöhung der Spannungsfestigkeit mit rippenförmigen Kriechstrecken aus elektrisch isolierendem Werkstoffes 37 versehen sein. Ferner ist es vorteilhaft, wenn im Inneren der Ankoppeleinheit 30 zumindest die Parallelschaltung aus dem Überspannungsableiter 19 und der Ableitspule 20 auf einer elektronischen Flachbaugruppe 10 angeordnet ist. Die Flachbaugruppe ist in der gleichen Weise wie die anderen Bauteile unzugänglich im Inneren des Werkstoffes 37 eingebettet.

Die Ankoppeleinheit 30 weist die Vorteile auf, daß sich diese im Falle eines internen Defektes, d.h. insbesondere bei einer Durchlegierung des Koppelkondensators, quasi selbst vom Energieübertragungsnetz 1 abtrennt. Ein Kurzschluß in der Ankoppelschaltung 30 bleibt nicht erhalten, sondern wird durch die Feinsicherung 15 schnell unterbrochen. Hierdurch wird einerseits das Energieübertragungsnetz 1 so geschützt, daß es betriebsfähig bleibt. Es müssen keine netzseitigen Schutzeinrichtungen aktiv werden, um durch eine Abschaltung des betroffenen Zweiges des Energieübertragungsnetzes 1 einen Kurzschluß in der Ankoppelschaltung 30 zu unterbrechen. Andererseits kann mit der Erfindung auch ein besonderer Personenschutz bewirkt werden. Dieser ist einerseits in der schnellen Reaktionsgeschwindigkeit der Ankoppelschaltung 35 zu sehen. Andererseits kann eine Reparatur gefahrloser erfolgen, da die Anschlußbuchse 36 für die Datenübertragungseinrichtung in jedem Falle spannungsfrei ist. Die Ankoppeleinheit 30 weist die weiteren Vorteile auf, daß der Überspannungsableiter 19 nur eine begrenzte Stromtragefähigkeit aufweisen muß. Dieser muß es lediglich zu Beginn des Kurzschlußfalles ermöglichen, daß so viel Strom in der Reihenschaltung fließen kann, um die Feinsicherung 15 zum Auslösen zu bringen. Die Abschaltung eines anklingenden Kurzschlußstromes in der Reihenschaltung erfolgt so schnell, daß sich dieser nicht bis auf einen Wert aufbauen kann, der die Stromtragefähigkeit des Überspannungsableiters 19 überschreitet.

Bei einer Ankoppeleinheit 30 der oben beschriebenen Art ist deren Anschlußpunkt 4 an eine der Phasen eines elektrischen Energieübertragungsnetzes 1, insbesondere eines Mittelspannungsnetzes, in der Praxis von besonderer Bedeutung.

Bislang wird eine Ankoppeleinheit der oben beschriebenen Art üblicherweise mit einer, an den außen liegenden Anschlußpunkt 4 angesetzten Schraubverbindung z.B. an ein Kabel des elektrischen Energieübertragungsnetzes 1 oder z.B. an eine Sammelschiene in einer Schaltanlage des elektrischen Energieübertragungsnetzes angeschlossen.

Bei einer Schraubverbindung können aber neben einer komplizierten Montage zusätzliche Probleme auftreten. So kann z.B. die sogenannte TE- Freiheit, d.h. die Sicherheit gegenüber Teilentladungen in Form von partiellen Überschlägen, eingeschränkt sein. An den Ecken einer Schraubverbindung können überhöhte Feldstärken insbesondere bei vorübergehenden Überspannungen auftreten und zu unerwünschten Teilentladungen führen. Ferner kann die Betriebs- und Berührungssicherheit einer Schraubverbindung eingeschränkt sein, da diese insbesondere bei Vorliegen von komplizierten Einbauverhältnissen u.U. nicht isolierte Kontaktteile aufweist. Desweiteren verursacht eine Schraubverbindung unter Umständen erhöhte Montagezeiten, da eine längere Freischaltzeit des anzuschließenden Kabels bzw. der Sammelschiene einer Mittelspannungsschaltanlage für eine gefahrlose Montage der Ankoppeleinheit erforderlich ist.

Der Erfindung liegt die Aufgabe zu Grunde, eine Ankoppeleinheit der oben beschriebenen Art so weiter auszugestalten, dass deren Anschluss an die Phase eines elektrischen Energieübertragungsnetzes, insbesondere eines Mittelspannungsnetzes, schneller und sicherer möglich ist.

Die Aufgabe wird durch die Merkmale der unabhängigen Ansprüche gelöst.

Die Erfindung hat den Vorteil, dass die zur Ankopplung an eine Phase insbesondere einer Mittelspannungsanlage notwendigen Elemente des Steckkontaktbereiches in einer steckbarer Anschlusstechnik ausgeführt sind. Hiermit wird die Montage erheblich erleichtert. Ein weiterer Vorteil wird darin gesehen, dass der Steckkontaktbereich in das isolierende Gehäuse der Ankoppeleinheit, insbesondere an einer Ober- bzw. Unterseite derselben, integriert ist. Hiermit werden der Berührungsschutz und die Sicherheit gegen Teilentladungen erheblich erhöht.

Die Erfindung wird des Weiteren anhand der in den nachfolgend kurz angeführten Figuren dargestellten Ausführungsbeispiele weiter erläutert. Dabei zeigt
- Fig. 1: den bereits erläuterten Schnitt durch eine Ankoppeleinheit,
- Fig. 2: einen Schnitt durch den Steckkontaktbereich einer Ankoppeleinheit gemäß der vorliegenden Erfindung, deren integrierter Steckkontaktbereich beispielhaft in selbstverklemmender Ausführung gestaltet ist,
- Fig. 3: einen Schnitt durch den Steckkontaktbereich einer Ankoppeleinheit gemäß der vorliegenden Erfindung, deren integrierter Steckkontaktbereich beispielhaft in selbstverriegelnde Ausführung gestaltet ist,
- Fig. 4: einen Schnitt durch eine für den Einsatz in Freiluft vorgesehenen Ankoppeleinheit gemäß der vorliegenden Erfindung, deren integrierter Steckkontaktbereich beispielhaft einen konusförmigen Kontaktkanal aufweist,
- Fig. 5: einen Schnitt durch eine für den Einsatz in einem Innenraum vorgesehenen Ankoppeleinheit gemäß der vorliegenden Erfindung, deren integrierter Steckkontaktbereich beispielhaft zwei konusförmige Kontaktkanäle aufweist, und
- Fig. 6: einen Schnitt durch den Steckkontaktbereich der Ankoppeleinheit von Figur 5 mit zwei beispielhaften Konussteckern für den Eingriff in die konusförmigen Kontaktkanäle.

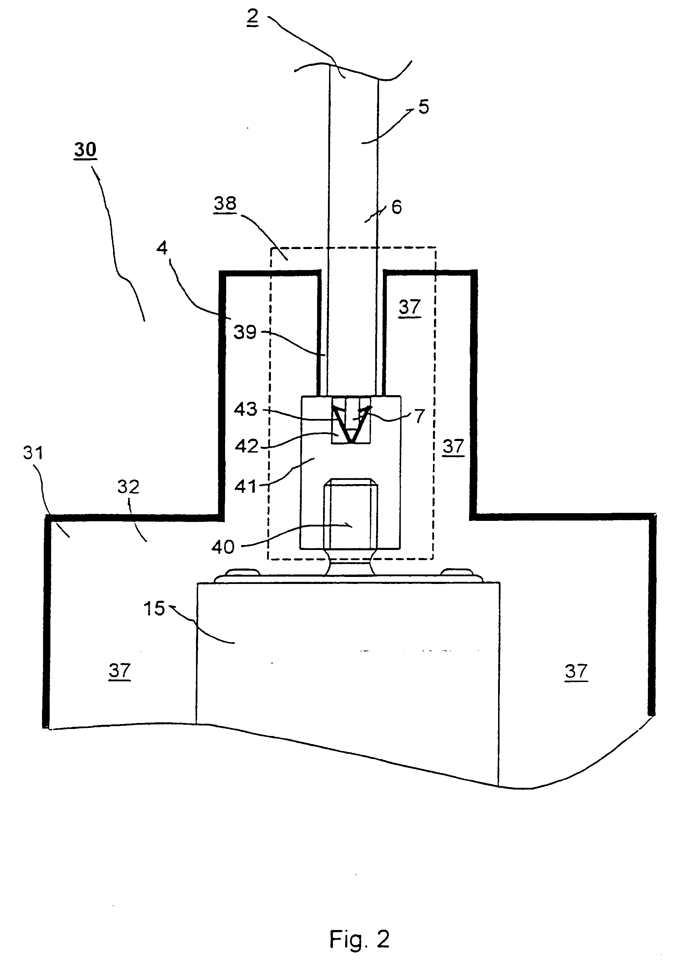

Figur 2 zeigt einen Schnitt durch den Anschlußpunkt 4 einer Ankoppeleinheit 30 an einem Kopfende 32 von deren Gehäuse 31. In das Kopfende 32 ist ein Steckkontaktbereich 38 gemäß einer ersten Ausführungsform der vorliegenden Erfindung integriert. Dieser ist beispielhaft in einer selbstverklemmenden Ausführung gestaltet, Der Steckkontaktbereich 38 weist mindestens einen Aufnahmekanal 39 für ein externes Anschlußteil 2 an eine Phase des Energieübertragungsnetzes auf. Im Beispiel der Figur 2 dient als Anschlußteil 2 beispielhaft ein Verbindungskabel 5, das bis den Aufnahmekanal 39 eingeführt ist. Dessen Mantel 6 kann mit dem umgebenden Aufnahmekanal 2 gegen Umwelteinflüsse wie z.B. Feuchtigkeit abgedichtet sein. Bei anderen Ausführungen können auch starre Verbindungsstücke als Anschlußteil zwischen Ankoppeleinheit und elektrischem Energieübertragungsnetz z.B. in einer Schalteinrichtung dienen.

Insbesondere an einem Fußpunkt des Aufnahmekanals 39 ist vorteilhaft ein Verbindungsteil 40 zum Anschluß an die Feinsicherung 15 angeordnet. Im Beispiel der Figur ist dieses in Form eines Gewindebolzens ausgeführt, der mit dem Kopfende der Feinsicherung 15 elektrisch leitend verbunden ist. Der Steckkontaktbereich 38 weist Mittel zur selbstklemmenden Steckkontaktierung des externen Anschlußteils 2 auf, insbesondere der freigelegten Kabellitze 7 des Anschlußkabels 5. Gemäß der Darstellung im Beispiel der Figur 2 weisen die Mittel zur selbstklemmenden Steckkontaktierung vorteilhaft einen Kontaktblock 41 auf, der beispielhaft über ein Schraubgewinde mit dem Verbindungsteil 40 verbunden ist und an einem Kopfende eine Kontaktmulde 42 mit einem eingelegten Selbstklemmkontakt 43 für die Kabellitze 7 aufweist. Schließlich ist der gesamte Innenraum des Gehäuses 31 einschließlich des im Kopfbereich 32 am Anschlußpunkt 4 integrierten Steckkontaktbereiches 38 mit einem elektrisch isolierenden Werkstoff ausgefüllt, z.B. mit Epoxydharz.

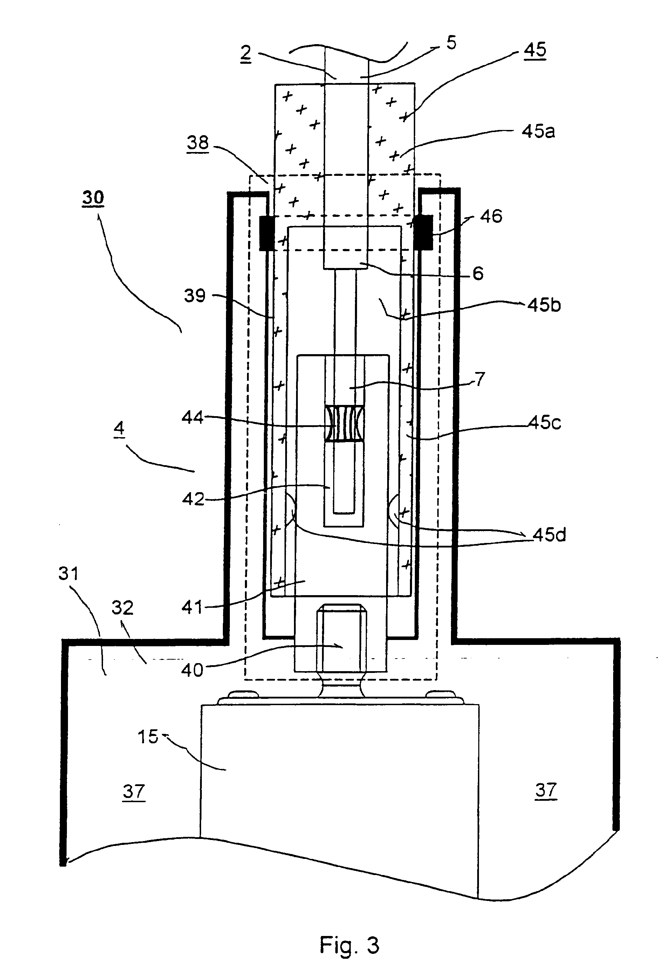

Figur 3 zeigt einen Schnitt durch den Anschlußpunkt 4 einer weiteren Ankoppeleinheit 30 ebenfalls an einem Kopfende 32 von deren Gehäuse 31. In das Kopfende 32 ist ein Steckkontaktbereich 38 gemäß einer weiteren Ausführungsform der vorliegenden Erfindung integriert. Dieser ist beispielhaft in einer selbstverriegelnde Ausführung gestaltet, Der Steckkontaktbereich 38 weist wiederum mindestens einen Aufnahmekanal 39 für ein externes Anschlußteil 2 an eine Phase des Energieübertragungsnetzes auf. Auch im Beispiel der Figur 3 dient als Anschlußteil 2 ein Verbindungskabel 5,

Bei dieser Ausführung der Erfindung weisen die Mittel zur selbstverriegelnden Steckkontaktierung eine Führungs- und Isolierhülse 45 auf, welche am externen Anschlußteil 2 angebracht ist und in den Steckkontaktbereich 38 eintaucht. Im Beispiel der Figur 3 ist der Kabelmantel 6 verklemmend durch einen Endbereich 45a der Führungs- und Isolierhülse 45 hindurchgeführt. An den Endbereich 45a schließt sich eine Hülsenwandung 45c an, die einen geschützten Innenraum 45b bildet. Bis in diesen geschützten Innenraum 45b reicht der Kabelmantel 6 und vor allem die frei liegende Kabellitze 7. Die Abmessungen von Aufnahmekanal 39 und Führungs- und Isolierhülse 45 sind vorteilhaft so aufeinander abgestimmt, daß die Einführung einer an einem abisolierten Ende eines Anschlußkabels 5 angebrachten Führungs- und Isolierhülse 45 in einen Aufnahmekanal 39 eine selbstverriegelnde Halterung des Anschlußteils 2 im integrierten Steckkontaktbereich 38 der Ankoppeleinheit 30 bewirkt.

Desweiteren weisen die Mittel zur selbstverriegelnden Steckkontaktierung einen Kontaktblock 41 mit einem in einer Kontaktmulde 42 befindlichen Selbstklemmkontakt 44 auf. Bei der Einführung der Führungs- und Isolierhülse 45 in den Aufnahmekanal 39 taucht die frei liegende Kabellitze 7 in die Kontaktmulde 42 ein und kontaktiert mit dem Selbstklemmkontakt 44. Dieser kann beispielsweise in Form einer Tonnenfeder ausgeführt sein. Der Kontaktblock 41 ist wiederum vorteilhaft mit der Feinsicherung 15 an dessen Kopfende über einen Gewindebolzen 40 verbunden.

Zur Verbesserung der Führung zwischen Aufnahmekanal 39 und Führungs- und Isolierhülse 45 einerseits und zur Verbesserung der selbstverriegelnden Klemmwirkung andererseits können z.B. auf der Innenseite der Hülsenwand 45c zusätzliche Klemmnoppen 45d vorhanden sein, welche bei dem in Figur 3 gezeigten, eingeschobenen Zustand der Führungs- und Isolierhülse 45 z.B. auf die Außenseite des Kontaktblocks 41 einwirken. Schließlich kann die Führungs- und Isolierhülse 45 mit dem umgebenden Aufnahmekanal 2 vorteilhaft z.B. über einen Dichtring 46 gegen Umwelteinflüsse wie z.B. Feuchtigkeit abgedichtet sein.

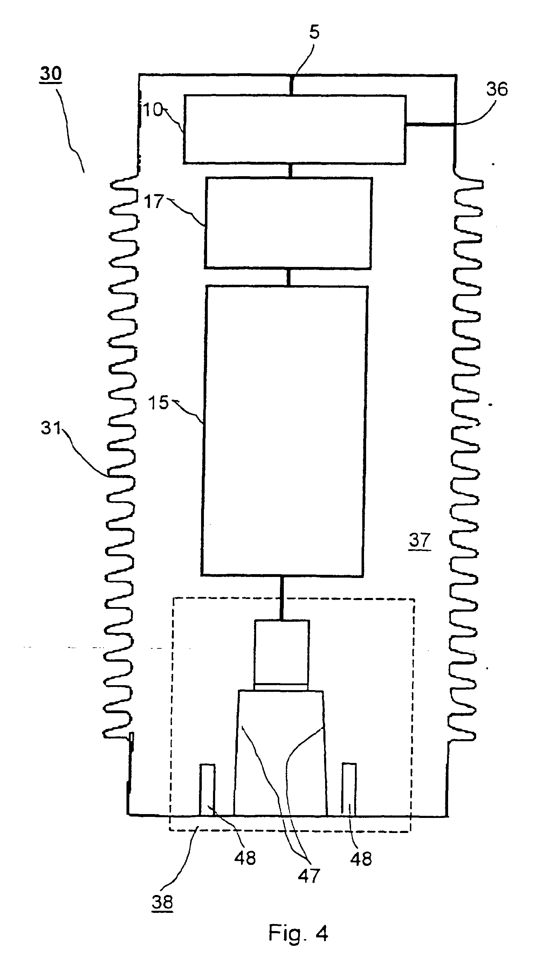

An Hand der Figuren 4 bis 6 werden weitere mögliche Ausführungsformen der Erfindung erläutert.

Dabei zeigt Figur 4 einen Schnitt durch eine für den Einsatz in Freiluft vorgesehene Ankoppeleinheit 30 gemäß der vorliegenden Erfindung, deren integrierter Steckkontaktbereich 38 beispielhaft einen konusförmigen Kontaktkanal 47 aufweist, in den ein entsprechend geformter Konusstecker am externen Anschlußteil einsteckbar ist. Im Beispiel der Figur 4 ist die Ankoppeleinheit 30 im Vergleich zur Figur 1 quasi auf dem Kopf stehend angeordnet. Dies ist für einen Einsatz in Freiluft und der dabei auftretenden Regenbelastung vorteilhaft. Entsprechend ist die Mantelaußenseite des Gehäuses 31 mit rippenförmigen Kriechstrecken, sogenannten Isolationsschirmen versehen. Der Zugang zum integrierten Steckkontaktbereich 38 ist somit nach unten gerichtet, während der Masseanschluß 5 der Reihenschaltung aus der Feinsicherung 15, dem Koppelkondensator 17 und der elektronischen Flachbaugruppe 10 mit der Parallelschaltung zumindest des Überspannungsableiters 19 und der Ableitspule 20 nach oben gerichtet ist. Zur Halterung eines in den konusförmigen Kontaktkanal 47 eingesteckten, entsprechend geformten Konussteckers kann der integrierte Steckkontaktbereich 38 Gewindebohrungen 48 zur Aufnahme von Halteschrauben aufweisen.

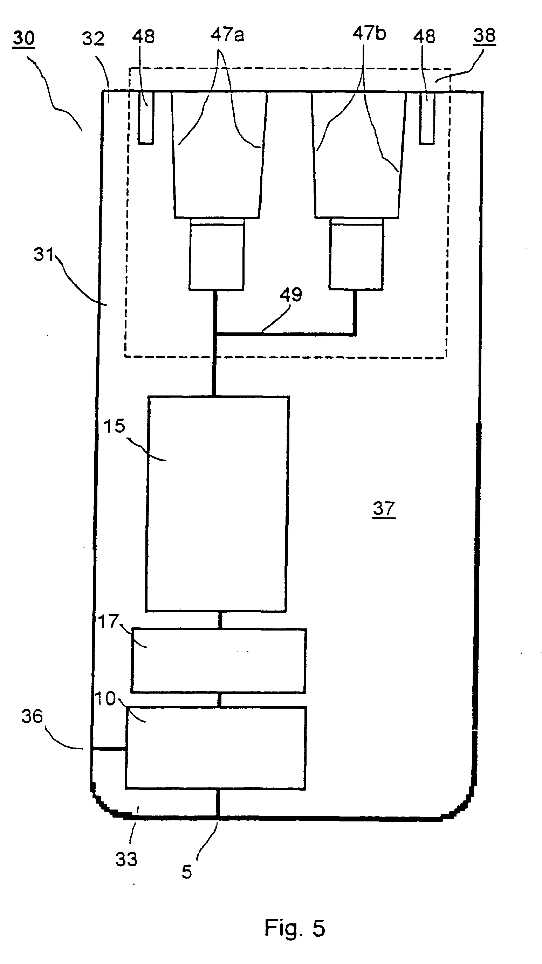

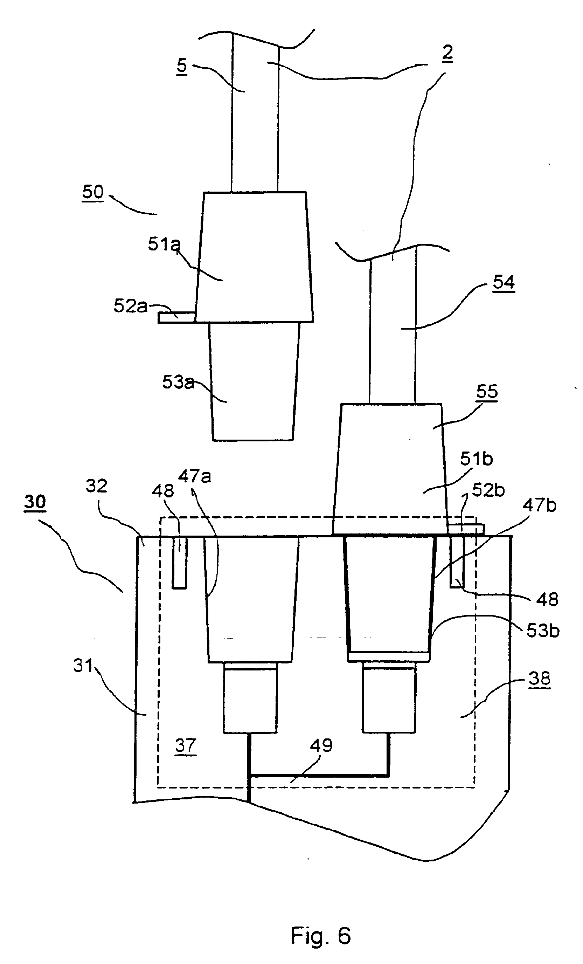

Figur 5 zeigt beispielhaft einen Schnitt durch eine für den Einsatz in einem Innenraum, z.B. einer Schaltanlage, vorgesehenen Ankoppeleinheit gemäß der vorliegenden Erfindung. Deren integrierter Steckkontaktbereich weist beispielhaft zwei konusförmige Kontaktkanäle 47a, 47b auf, in die entsprechend geformte Konusstecker einsteckbar sind, die sich an den Enden von zwei externen Anschlußteilen befinden. Eine Anordnung dieser Art ist in Figur 6 beispielhaft dargestellt und wird nachfolgend noch näher erläutert werden. Bei der in Figur 5 dargestellten Anordnung ist die Mantelaußenseite des Gehäuses 31 metallisch leitend. Hierdurch kann die elektromagnetische Abschirmung der Ankoppeleinheit 30 verbessert werden. Die beiden konusförmigen Kontaktkanäle 47a, 47b sind im Inneren des Gehäuses 31, welches wiederum vollständig mit einem isolierenden Werkstoff 37 ausgefüllt ist, über eine Leitungsstück 49 miteinander und mit dem einen Anschlußpunkte der Feinsicherung 15 verbunden.

Figur 6 zeigt schließlich einen Schnitt durch den Steckkontaktbereich der in Figur 5 dargestellten Ankoppeleinheit 30 mit zwei beispielhaften Konussteckern 50, 55, welche für den Eingriff in die konusförmigen Kontaktkanäle 47a, 47b vorgesehen sind. Die Konusstecker 50, 55 befinden sich dabei an einem externen Anschlußteil 2, welches beispielhaft aus zwei Verbindungskabeln 5 und 54 besteht. Dabei kann das eine Verbindungskabel z.B. direkt mit einer Phase eines Energieversorgungsnetzes verbunden sein, während das andere Verbindungskabel z.B. mit einem Leistungsschalter verbunden ist. Dies hat den Vorteil, daß unter Zuhilfenahme eines in das Gehäuse 31 einer Anschlußeinheit 30 gemäß der vorliegenden Erfindung integrierten Steckkontaktbereiches 38 mehrere Verbindungen gleichzeitig hergestellt werden können. Die Konusstecker 50, 55 weisen dabei Steckkontakte 53a, 53b auf, welche an die Form der konusförmigen Kontaktkanäle 47a, 47b angepaßt ist. Schließlich weisen die Gehäuse 51a, 51b vorteilhaft Befestigungslaschen 52a, 52b auf, mit die Konusstecker 50, 55 über zusätzliche, in die Gewindebohrungen 48 einbringbare Schrauben, sicher mit der Ankoppeleinheit 30 verbindbar sind.

## Patentansprüche

1. Ankoppeleinheit (30) zur Ankopplung einer Datenübertragungsvorrichtung (3) an eine Phase (T) eines elektrischen Energieübertragungsnetzes (1), mit einem Gehäuse (31), welches zumindest enthält
a) eine Ankoppelschaltung (35), die zumindest aufweist eine Reihenschaltung aus
a1) einer Feinsicherung (15),
a2) einem Koppelkondensator (17), und
a3) einer Parallelschaltung zumindest aus einem Überspannungsableiter (19) und einer Koppelinduktivität (20), die mit einem Bezugspotential (5) verbunden ist,
b) ein Kontaktelement (36) zum Anschluss einer Datenübertragungsvorrichtung (3), welches mit der Parallelschaltung verbunden ist,
**dadurch gekennzeichnet, dass** innerhalb der Ankoppeleinheit Mittel zur selbstklemmenden oder selbstverriegelnden Steckkontaktierung (41,42,43,44,45,45a-45d) angeordnet und die Mittel zur selbstklemmenden oder selbstverriegelnden Steckkontaktierung (41,42,43,44,45,45a-45d) mit der Feinsicherung (15) verbunden sind, wobei die Mittel zur selbstklemmenden oder selbstverriegelnden Steckkontaktierung (41,42,43,44,45,45a-45d) mittels mindestens eines Aufnahmekanals (39) mit einem externen Anschlussteil (2) an eine Phase (T) eines elektrischen Energieübertragungsnetzes (1) verbindbar sind.

2. Ankoppeleinheit (30) nach Anspruch 1,
**dadurch gekennzeichnet, dass**
der Aufnahmekanal (39) im der Phase (T) des elektrischen Energieübertragungsnetzes (1) zugewandten Kopfbereich (32) des Gehäuses (31) angeordnet ist.

3. Ankoppeleinheit (30) nach Anspruch 2,
**dadurch gekennzeichnet, dass**
in dem Aufnahmekanal (39) ein Verbindungsteil (40) zum Anschluss an die Feinsicherung (15) angeordnet ist, insbesondere ein Gewindebolzen.

4. Ankoppeleinheit (30) nach einem der Ansprüche 1 bis 3,
**dadurch gekennzeichnet, dass**
die Mittel zur selbstverriegelnden Steckkontaktierung (41,42,44,45,45a-45d) aufweisen
a) einen Kontaktblock (41) mit einem in einer Kontaktmulde (42) befindlichen Selbstklemmkontakt (44), und
b) eine Führungs- und Isolierhülse (45), welcher am externen Anschlussteil (2) angebracht ist und innerhalb des Aufnahmekanals (39) angeordnet ist.

5. Ankoppeleinheit (30) zur Ankopplung einer Datenübertragungsvorrichtung (3) an eine Phase (T) eines elektrischen Energieübertragungsnetzes (1), mit einem Gehäuse (31), welches zumindest enthält
a) eine Ankoppelschaltung (35), die zumindest aufweist eine Reihenschaltung aus
a1) einer Feinsicherung (15),
a2) einem Koppelkondensator (17), und
a3) einer Parallelschaltung zumindest aus einem Überspannungsableiter (19) und einer Koppelinduktivität (20), die mit einem Bezugspotential (5) verbunden ist,
b) ein Kontaktelement (36) zum Anschluss einer Datenübertragungsvorrichtung (3), welches mit der Parallelschaltung verbunden ist,
**dadurch gekennzeichnet, dass** innerhalb der Ankoppeleinheit (30) mindestens ein erster konischer Kontaktkanal (47, 47a) angeordnet und der konische Kontaktkanal (47) mit der Feinsicherung (15) verbunden ist, wobei der konische Kontaktkanal mittels eines ersten entsprechend geformten Konussteckers (50,55) mit einem ersten externen Anschlussteil (2) an eine Phase (T) eines elektrischen Energieübertragungsnetzes (1) verbindbar ist.

6. Ankoppeleinheit (30) nach Anspruch 5,
**dadurch gekennzeichnet, dass**
der konische Kontaktkanal (47) der der Phase (T) des elektrischen Energieübertragungsnetzes (1) zugewandte Kopfbereich (32) des Gehäuses (31) angeordnet ist.

7. Ankoppeleinheit (30) nach Anspruch 6,
**dadurch gekennzeichnet, dass**
innerhalb der Ankoppel einheit (30) ein zweiter, dem ersten konischen Kontaktkanal (47a) parallel geschulteter zweiter konischer kontaktkanal (47b) angeordnet ist, der mittels eines zweiten entsprechen geformten konussteckers (50, 55) mit einem zweiten Anschlussteil (2) verbindbar ist.

## Claims

1. Coupling unit (30) for coupling a data transmission device (3) to a phase (T) of an electrical power transmission network (1), having a housing (31), which at least contains
a) a coupling circuit (35), which at least has a series circuit comprising
a1) a miniature fuse (15),
a2) a coupling capacitor (17), and
a3) a parallel circuit at least comprising a surge arrester (19) and a coupling inductance (20), which is connected to a reference potential (5),
b) a contact element (36) for connecting a data transmission device (3), which is connected to the parallel circuit, **characterized in that** means for self-clamping or self-locking plug-in contact-making (41, 42, 43, 44, 45, 45a-45d) are arranged within the coupling unit, and the means for self-clamping or self-locking plug-in contact-making (41, 42, 43, 44, 45, 45a-45d) are connected to the miniature fuse (15), it being possible for the means for self-clamping or self-locking plug-in contact-making (41, 42, 43, 44, 45, 45a-45d) to be connected to an external connection part (2) to a phase (T) of an electrical power transmission network (1) by means of at least one receiving channel (39).

2. Coupling unit (30) according to Claim 1, **characterized in that** the receiving channel (39) is arranged in the top region (32) of the housing (31), which top region faces the phase (T) of the electrical power transmission network (1).

3. Coupling unit (30) according to Claim 2, **characterized in that** a connecting part (40) for connection to the miniature fuse (15), in particular a threaded bolt, is arranged in the receiving channel (39).

4. Coupling unit (30) according to one of Claims 1 to 3, **characterized in that** the means for self-locking plug-in contact-making (41, 42, 43, 44, 45, 45a-45d) have
a) a contact block (41) having a self-clamping contact (44) located in a contact depression (42), and
b) a guide and insulating sleeve (45), which is fitted to the external connection part (2) and is arranged within the receiving channel (39).

5. Coupling unit (30) for coupling a data transmission device (3) to a phase (T) of an electrical power transmission network (1), having a housing (31), which at least contains
a) a coupling circuit (35), which at least has a series circuit comprising
a1) a miniature fuse (15),
a2) a coupling capacitor (17), and
a3) a parallel circuit at least comprising a surge arrester (19) and a coupling inductance (20), which is connected to a reference potential (5),
b) a contact element (36) for connecting a data transmission device (3), which is connected to the parallel circuit, **characterized in that** at least one first conical contact channel (47, 47a) is arranged within the coupling unit (30), and the conical contact channel (47) is connected to the miniature fuse (15), it being possible for the conical contact channel to be connected to a first external connection part (2) to a phase (T) of an electrical power transmission network (1) by means of a first correspondingly shaped cone plug (50, 55).

6. Coupling unit (30) according to Claim 5, **characterized in that** the conical contact channel (47) of the top region (32) of the housing (31), which top region faces the phase (T) of the electrical power transmission network (1).

7. Coupling unit (30) according to Claim 6, **characterized in that** a second conical contact channel (47b), which is connected in parallel with the first conical contact channel (47a), is arranged within the coupling unit (30) and can be connected to a second connection part (2) by means of a second correspondingly shaped cone plug (50, 55).

## Revendications

1. Unité (30) de couplage d'un dispositif (3) de transmission de données à une phase (T) d'un réseau (1) de transport d'électricité, comprenant un boîtier (31) qui contient au moins
a) un circuit (35) de couplage qui a au moins un circuit série constitué
a1) d'un fusible (15) à fil fin,
a2) d'un condensateur (17) de couplage, et
a3) d'un circuit parallèle constitué d'au moins un parafoudre (19) et d'une inductance (20) de couplage, qui est reliée à un potentiel (5) de référence,
b) un élément (36) de contact qui est destiné à la connexion d'un dispositif (3) de transmission de données et qui est relié au circuit parallèle,
**caractérisé en ce qu'**il est disposé, à l'intérieur de l'unité de couplage, des moyens (41, 42, 43, 44, 45, 45a à 45d) de mise en contact par enfichage avec auto-blocage ou auto-verrouillage et les moyens (41, 42, 43, 44, 45, 45a à 45d) de mise en contact par enfichage avec auto-blocage ou avec auto-verrouillage sont reliés au fusible (15) à fil fin, les moyens (41, 42, 43, 44, 45a à 45d) pouvant être reliés, à l'aide d'au moins un canal (39) de réception ayant une partie (2) extérieure formant borne, à une phase (T) d'un réseau (1) de transport d'électricité.

2. Unité (30) de couplage suivant la revendication 1,
**caractérisé en ce que**
le canal (39) de réception est disposé dans la partie (32) de tête, tournée vers la phase (T) du réseau (1) de transport d'électricité, du boîtier (31).

3. Unité (30) de couplage suivant la revendication 2,
**caractérisé en ce que**
il est disposé dans le canal (39) de réception une pièce (40) de liaison pour la connexion au fusible (15) à fil fin, notamment un axe fileté.

4. Unité (30) de couplage suivant l'une des revendications 1 à 4,
**caractérisé en ce que**
les moyens (41, 42, 43, 44, 45a à 45d) de contact par enfichage avec auto-verrouillage ont
a) un bloc (41) de contact ayant un contact (44) à auto-blocage se trouvant dans une cuvette (42) de contact, et
b) une douille (45) de guidage et d'isolement, qui est montée sur la pièce (2) extérieure formant borne et qui est disposée à l'intérieur du canal (39) de réception.

5. Unité (30) de couplage d'un dispositif (3) de transmission de données à une phase (T) d'un réseau (1) de transport d'électricité, comprenant un boîtier (31) qui contient au moins
a) un circuit (35) de couplage, qui a au moins un circuit série constitué
a1) d'un fusible (15) à fil fin,
a2) d'un condensateur (17) de couplage, et
a3) d'un circuit parallèle constitué d'au moins un parafoudre (19) et d'une inductance (20) de couplage, qui est reliée à un potentiel (5) de référence,
b) un élément (36) de contact, qui est destiné à la connexion d'un dispositif (3) de transmission de données et qui est relié au circuit parallèle,
**caractérisé en ce que**
il est disposé, à l'intérieur de l'unité (30) de couplage, au moins un premier canal (47, 47a) de contact conique et le canal (47) de contact conique est relié au fusible (15) à fil fin, le canal de contact conique pouvant être relié au moyen d'un premier connecteur (50, 55) en cône conformé de manière correspondante et ayant une première pièce (2) extérieure formant borne à une phase (T) d'un réseau (1) de transport d'énergie.

6. Unité (30) de couplage suivant la revendication 5, **caractérisé en ce que** le canal (47) de contact conique est disposé dans la partie (32) de tête, tournée vers la phase (T) du réseau (1) de transport d'électricité, du boîtier (31).

7. Unité (30) de couplage suivant la revendication 6,
**caractérisé en ce que**
il est disposé, à l'intérieur de l'unité (30) de couplage, un deuxième canal (47b) de contact conique qui est monté en parallèle au premier contact (47a) de contact conique et qui peut être relié à une deuxième pièce (2) formant borne à l'aide d'un deuxième connecteur (50, 55) en cône conformé de manière correspondante.
